# EUROPEAN PATENT SPECIFICATION

(11) **EP 2 420 519 B1**
(45) Date of publication and mention of the grant of the patent: **13.06.2018**
(21) Application number: 10764054.2
(22) Date of filing: 16.04.2010
(51) Int. Cl.: C08F 4/654, C08F 10/06, C08F 4/651, C08F 4/656, C08F 110/06

(54) **CATALYST COMPONENT USED FOR OLEFIN POLYMERIZATION, PROCESS FOR PREPARING THE SAME, AND CATALYST CONTAINING THE SAME**
KATALYSATORKOMPONENTE ZUR OLEFINPOLYMERISIERUNG, VERFAHREN ZU IHRER HERSTELLUNG UND KATALYSATOR DAMIT
COMPOSANT CATALYTIQUE UTILISÉ POUR LA POLYMÉRISATION D'OLÉFINES, PROCÉDÉ POUR LE PRÉPARER, ET CATALYSEUR LE CONTENANT

(30) Priority: 17.04.2009 CN 200910082420; 21.08.2009 CN 200910163055
(43) Date of publication of application: 22.02.2012
(73) Proprietor: China Petroleum & Chemical Corporation, Beijing 100728 (CN); Beijing Research Institute of Chemical Industry, China Petroleum & Chemical Corporation, Chaoyang District Beijing 100013 (CN)
(72) Inventor: TAN, Zhong, Beijing 100013 (CN); YAN, Li'an, Beijing 100013 (CN); XU, Xiudong, Beijing 100013 (CN); ZHOU, Qilong, Beijing 100013 (CN); SONG, Weiwei, Beijing 100013 (CN); LI, Fengkui, Beijing 100013 (CN); YIN, Shanshan, Beijing 100013 (CN); YU, Jinhua, Beijing 100013 (CN); WANG, Ying, Beijing 100013 (CN); REN, Chunhong, Beijing 100013 (CN)
(74) Representative: Hoffmann Eitle
(86) International application number: PCT/CN2010/000515
(87) International publication number: WO 2010/118641

(56) References cited:
- EP-A1- 1 666 505
- CN-A- 1 208 045
- CN-A- 1 374 971
- CN-A- 1 681 853
- CN-A- 101 643 519
- US-B2- 7 388 060

## Description

### Field of the Invention

The present invention relates to a process for the preparation of a catalyst component for olefin polymerization, a catalyst component obtained by said process, and a catalyst comprising the catalyst component, and more specifically to a process for the preparation of a solid particulate catalyst component for olefin polymerization comprising magnesium, titanium, a halogen and an internal electron donor as essential constituents, a catalyst component obtained by said process, and a catalyst comprising the catalyst component.

### Background Art

One process for the preparation of a solid particulate catalyst for olefin polymerization containing magnesium, titanium, a halogen and an electron donor as essential constituents comprises preparing magnesium dichloride into a homogeneous solution, then precipitating particulate magnesium dichloride carrier by crystallization, and loading a titanium-containing active component thereon. In the course of the precipitation, the presence of a co-precipitant is generally required, to obtain solids having a homogeneous particle size. The co-precipitant is generally an organic anhydride, an organic acid, a ketone, an ether, a carboxylic ester, or the like.

CN85100997A discloses a titanium-containing catalyst component and a process for the preparation thereof. Said process comprises dissolving a magnesium halide in an organic epoxy compound and an organo phosphorus compound to form a homogeneous solution; combining the solution with a titanium tetrahalide or a derivate thereof, to precipitate solids in the presence of a co-precipitant, such as an organic anhydride; and treating the solids with a polycarboxylic ester, and then with a mixture of a titanium tetrahalide and an inert diluent, to obtain the titanium-containing catalyst component.

CN1436766A discloses an ester of polyol, which is useful in the preparation of a catalyst for olefin polymerization. Both CN1436796A and CN1453298A describe active components of polyolefin catalysts obtained by using such a specific ester of polyol as an internal electron donor, and said catalysts have higher activities and better stereospecific property. In said patent applications, the ester of polyol is supported on a surface of a particulate catalyst carrier after the catalyst carrier has been formed, and the amount of the ester of diol is relatively large. EP 1 665 505 A1 describes catalyst components comprising magnesium chloride and silica as composite support at a specific ratio. The catalyst component can be used in a catalyst used for olefin polymerization and leads to a high polymerization activity and high stereospecificity.

Although a number of catalysts for olefin polymerization have been disclosed in the prior art, there is still a need for a catalyst for olefin polymerization having good combined performance.

### Summary of the Invention

The inventors have found by a number of experiments that in the preparation of a catalyst component for olefin polymerization, by using an ester of polyol having a specific structure or a combination of the ester of polyol and an organic silane as co-precipitant, it is possible to effectively control the precipitation of catalyst component particles, and thereby to obtain at a high yield a catalyst component having good particle morphology and narrow particle size distribution, which catalyst component, when used together with a cocatalyst in olefin polymerization, exhibits a high catalytic activity, a good hydrogen response property, a good stereospecific property, and good kinetic behavior, and gives a polymer having less fines.

Thus, an object of the invention is to provide a process for the preparation of a catalyst component for olefin polymerization.

A further object of the invention is to provide a catalyst component obtained by the process according to the invention.

A still further object of the invention is to provide a catalyst, comprising a reaction product of (1) the catalyst component according to the invention; (2) an alkyl aluminum compound; and (3) optionally, an external electron donor compound.

A still further object of the invention is to provide a process for polymerizing olefin, comprising contacting an olefin of formula CH₂=CHR, wherein R is H or an alkyl having 1 to 6 carbon atoms, optionally another kind of said olefin as comonomer, and optionally a diene as a second comonomer, with the catalyst of the invention under polymerization conditions; and recovering the resulting polymer.

### Detailed description of preferred embodiments

The term "polymerization" as used herein intends to encompass homopolymerization and copolymerization. The term "polymer" as used herein intends to encompass homopolymer, copolymer and terpolymer.

As used herein, the term "catalyst component" intends to means main catalyst component or procatalyst, which, together with a conventional cocatalyst such as an alkyl aluminum and an optional external electron donor, constitutes the catalyst for olefin polymerization.

In a first aspect, the present invention provides a process for the preparation of a catalyst component for olefin polymerization, comprising the steps of
(1) dissolving a magnesium halide in a solvent system to form a homogeneous solution, and optionally, adding an internal electron donor compound C thereto before, during, or after the dissolving;
(2) combining a titanium compound and a co-precipitant with the solution from step (1) to form a mixture;
(3) slowly heating (for example, over about 0.5 to 3 hours) the mixture from step (2) to a temperature of from 60 to 110°C, with an internal electron donor compound D being optionally added during or after the heating, and upon the temperature being reached, stirring the mixture for 0.5 to 8 hours, then removing the mother liquid through filtration, and washing the residual solids with an inert solvent to obtain magnesium- and titanium-containing solids; and
(4) treating the magnesium- and titanium-containing solids from step (3) with a titanium compound and an optional internal electron donor compound E in an inert solvent one or more times, then washing the solids with an inert solvent to obtain a solid catalyst component;
wherein the co-precipitant is a combination of co-precipitant A and co-precipitant B, the co-precipitant A is at least one ester of diol represented by general formula (I): 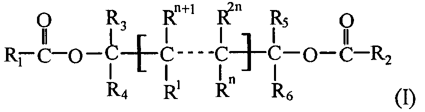
wherein R₁ to R₆ and R¹ to R²ⁿ are independently chosen from hydrogen, halogen, optionally substituted linear or branched C₁-C₂₀ alkyl, C₃-C₂₀ cycloalkyl, C₆-C₂₀ aryl, C₇-C₂₀ alkaryl, C₇-C₂₀ aralkyl, C₂-C₁₀ alkenyl, and C₁₀-C₂₀ fused aryl, with the proviso that R₁ and R₂ are not hydrogen; one or more of R₃ to R₆ and R¹ to R²ⁿ are optionally linked to form a ring, and n is an integer ranging from 0 to 10,
the co-precipitant B is at least one organic silane represented by general formula (II): R^{I}ₐR^{II}_{b}Si(OR^{III})_{c}, wherein R^{I} and R^{II} are independently chosen from hydrogen, halogen, optionally substituted linear or branched C₁ to C₁₀ alkyl, C₂ to C₁₀ alkenyl, C₃ to C₁₀ cycloalkyl, C₆ to C₁₀ aryl, and heteroaryl having 3 to 10 carbon atoms and 1 to 3 heteroatoms chosen from N, O and S; R^{III} is independently chosen from C₁ to C₁₀ alkyl, C₃ to C₁₀ cycloalkyl and C₆ to C₁₀ aryl; and wherein a and b are independently an integer of from 0 to 4, c is an integer of from 0 to 4, and (a+b+c)=4.

The esters of diols useful as the co-precipitant A are disclosed in, for example, Chinese patent application CN1436766A and CN1436796A, the relevant contents of which are incorporated herein by reference.

Preferred compounds useful as the co-precipitant A are those represented by general formula (III): 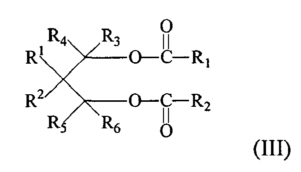 wherein R₁ to R₆ and R¹-R² groups are as defined for the general formula (I).

Examples include, but are not limited to, 2-ethyl-1,3-propandiol dibenzoate, 2-propyl-1,3-propandiol dibenzoate, 2-isopropyl-2-isoamyl-1,3-propandiol dibenzoate, 1,3-butandiol di-methylbenzoate, 2-methyl-1,3-butandiol di-m-chlorobenzoate, 2,3-dimethyl-1,3-butandiol dibenzoate, 1,3-pentandiol dipivalate, 2,4-pentandiol dibenzoate, 2,2-dimethyl-1,3-pentandiol dibenzoate, 2,4-heptandiol dibenzoate, 2-methyl-3,5-heptandiol dibenzoate, 2,3-diisopropyl-1,4-butandiol dibenzoate, 3,5-heptandiol dibenzoate, 4-ethyl-3,5-heptandiol dibenzoate, with 2,4-pentandiol dibenzoate, 3,5-heptandiol dibenzoate, and 4-ethyl-3,5-heptandiol dibenzoate being preferred.

Preferably, in the formula (II), R^{I} and R^{II} are independently chosen from C₁ to C₈ alkyl, C₃ to C₆ cycloalkyl, and C₆ to C₁₀ aryl, and R^{III} is a C₁ to C₁₀ alkyl.

Examples of the organic silane of the general formula (II): R^{I}ₐR^{II}_{b}Si(OR^{III})_{c} useful as the co-precipitant B include, but are not limited to, tetraethoxy silane, methyl cyclohexyl dimethoxy silane, diphenyl dimethoxy silane, methyl tert-butyl dimethoxy silane, dicyclopentyl dimethoxy silane, diisopropyl dimethoxy silane, diisobutyl dimethoxy silane, 2-ethylpiperidino tert-butyl dimethoxy silane, 1,1,1-trifluoro-2-propyl 2-ethylpiperidino dimethoxy silane, 1,1,1-trifluoro-2-propyl methyl dimethoxy silane, trimethyl methoxy silane, trimethyl ethoxy silane, trimethyl phenoxy silane, dimethyl dimethoxy silane, dimethyl diethoxy silane, methyl tert-butyl dimethoxy silane, diphenyl diethoxy silane, phenyl trimethoxy silane, phenyl triethoxy silane, vinyl trimethoxy silane, with tetraethoxy silane, methyl cyclohexyl dimethoxy silane, diphenyl dimethoxy silane, dicyclopentyl dimethoxy silane, diisopropyl dimethoxy silane, and diisobutyl dimethoxy silane being preferred.

Relative to one mole of magnesium halide, the amount of the co-precipitant A used ranges from 0.001 to 0.3 moles, and preferably from 0.01 to 0.1 moles, and the amount of the co-precipitant B used ranges preferably from 0.01 to 0.5 moles, and more preferably from 0.01 to 0.3 moles.

The magnesium halide is chosen from magnesium dihalides, water or alcohol complexes of magnesium dihalides, derivatives of magnesium dihalides wherein one halogen atom in the magnesium dihalides is replaced with an alkoxy or a halogenated alkoxy, and mixtures thereof, and preferably from magnesium dihalides and alcohol complexes of magnesium dihalides. The specific examples include, but are not limited to, magnesium dichloride, magnesium dibromide, magnesium diiodide, and alcohol complexes thereof.

In an embodiment, the solvent system used in step (1) consists of an organic epoxy compound, an organo phosphorus compound and an optional inert diluent.

The organic epoxy compound comprises at least one of aliphatic epoxy compounds and diepoxy compounds, halogenated aliphatic epoxy compounds and diepoxy compounds, glycidyl ether, and inner ethers, having from 2 to 8 carbon atoms. Examples include, but are not limited to, epoxy ethane, epoxy propane, epoxy butane, vinyl epoxy ethane, butadiene dioxide, epoxy chloropropane, glycidyl methyl ether, and diglycidyl ether, with epoxy chloropropane being preferred.

The organo phosphorus compound comprises at least one of hydrocarbyl esters of orthophosphoric acid, halogenated hydrocarbyl esters of orthophosphoric acid, hydrocarbyl esters of phosphorous acid, and halogenated hydrocarbyl esters of phosphorous acid. Examples include, but are not limited to, trimethyl orthophosphate, triethyl orthophosphate, tributyl orthophosphate, triphenyl orthophosphate, trimethyl phosphite, triethyl phosphite, tributyl phosphite and tribenzyl phosphate, with tributyl orthophosphate being preferred.

Relative to one mole of the magnesium halide, the amount of the organic epoxy compound used ranges from 0.2 to 10 moles, and preferably from 0.5 to 4 moles, and the amount of the organo phosphorus compound used ranges from 0.1 to 3 moles, and preferably from 0.3 to 1.5 moles.

The optional inert diluent may be chosen from hexane, heptane, octane, decane, benzene, toluene, xylene, 1,2-dichloroethane, chlorobenzene, and other hydrocarbon and halogenated hydrocarbon solvents, as long as it can facilitate the dissolution of the magnesium halide. These inert diluents may be used alone or in combination. The amount of the inert diluent, if used, is not particularly crucial, however, it preferably ranges from 0.1 to 10 liters per mole of the magnesium halide, and preferably from 0.2 to 5 liters per mole of the magnesium halide.

In another embodiment, the solvent system used in step (1) consists of an alcohol compound and an optional inert diluent.

The alcohol compound is chosen from linear or branched aliphatic alcohol having 1 to 10 carbon atoms, cycloaliphatic alcohol having 3 to 12 carbon atoms, alkaryl alcohol having 6 to 20 carbon atoms, aralkyl alcohol having 6 to 20 carbon atoms, and mixtures thereof. Examples include, but are not limited to, ethanol, propanol, butanol, 2-ethylhexanol, benzyl alcohol, phenethyl alcohol. 2-Ethylhexanol is preferred. The amount of the alcohol used ranges from 2.0 to 6.0 moles, preferably from 2.0 to 4.5 moles, and more preferably from 2.5 to 3.5 moles, relative to one mole of the magnesium halide.

The optional inert diluent may be chosen from hexane, heptane, octane, decane, benzene, toluene, xylene, 1,2-dichloroethane, chlorobenzene, and other hydrocarbon and halogenated hydrocarbon solvents, as long as it can facilitate the dissolution of the magnesium halide. These inert diluents may be used alone or in combination. The amount of the inert diluent, if used, is not particularly crucial, however, it may range from 0.1 to 5 liters per mole of the magnesium halide.

In step (1), dissolution temperature can be easily determined by a person ordinarily skilled in the art depending on the solvent selected and the amount of the solvent used. In general, dissolution temperature may be between 10°C and 150°C, and preferably between 50°C and 120°C, and the upper limit of the temperature is generally not higher than the boiling point of the solvent.

In an embodiment, step (2) is carried out as follows: at a temperature of from -30 °C to 60 °C, and preferably from -30 °C to 5 °C, a titanium compound is combined with the solution from step (1), and then a co-precipitant is added thereto to form a mixture; alternatively, a co-precipitant is added to the solution from (1), and then at a temperature of from -30 °C to 60 °C, and preferably from -30 °C to 5 °C, the solution is combined with a titanium compound to form a mixture.

The internal electron donor compounds C, D, and E are independently chosen from the esters of diol represented by the general formula (I), alkyl esters of aliphatic or aromatic mono-basic carboxylic acids, alkyl esters of aliphatic or aromatic poly-basic carboxylic acids, aliphatic ethers, cycloaliphatic ethers, aliphatic katones, and mixtures thereof. The preferred includes esters of aliphatic dibasic carboxylic acids, esters of aromatic dibasic carboxylic acids, and diethers. The more preferred includes phthalates, malonates, succinates, glutarates, pivalates, adipates, sebacates, maleates, naphthalene dicarboxylates, trimellitates, benzene-1,2,3-tricarboxylates, pyromellitates and carbonates. Examples include, but are not limited to, diethyl phthalate, di-iso-butyl phthalate, di-n-butyl phthalate, di-iso-octyl phthalate, di-n-octyl phthalate, diethyl malonate, dibutyl malonate, diethyl 2,3-di-iso-propylsuccinate, di-iso-butyl 2,3-di-iso-propylsuccinate, di-n-butyl 2,3-diisopropylsuccinate, dimethyl 2,3-di-iso-propylsuccinate, di-iso-butyl 2,2-dimethylsuccinate, di-iso-butyl 2-ethyl-2-methylsuccinate, diethyl 2-ehtyl-2-methylsuccinate, diethyl adipate, dibutyl adipate, diethyl sebacate, dibutyl sebacate, diethyl maleate, di-n-butyl maleate, diethyl naphthalene dicarboxylate, dibutyl naphthalene dicarboxylate, triethyl trimellitate, tributyl trimellitate, triethyl benzene-1,2,3-tricarboxylate, tributyl benzene-1,2,3-tricarboxylate, tetraethyl pyromellitate, and tetrabutyl pyromellitate. By selecting different internal electron donor, the catalyst may exhibit different stereospecific property and hydrogen response property.

Relative to one mole of the magnesium halide, the amount of the electron donor compound C used ranges from 0 to 3 moles, and preferably from 0 to 0.3 moles, the amount of the electron donor compound D plus E used ranges from 0 to 5 moles, and preferably from 0 to 1 mole, and the amount of the electron donor compound C+D+E used ranges from 0 to 5 moles, and preferably from 0.02 to 1 mole.

The titanium compound used in step (2) and the titanium compound used in step (4) may be the same or different, and they have a general formula: TiXₙ(OR)₄₋ₙ, in which R is independently a C₁-C₂₀ hydrocarbyl group, X is independently a halogen, and n = 1 to 4. Examples include, but are not limited to, titanium tetrachloride, titanium tetrabromide, titanium tetraiodide, tetrabutoxy titanium, tetraethoxy titanium, triethoxy titanium chloride, diethoxy titanium dichloride, ethoxy titanium trichloride, and mixtures thereof, with titanium tetrachloride being preferred. Conveniently, the same titanium compound is used in step (2) and in step (4). Relative to one mole of the magnesium halide, the amount of the titanium compound used in step (2) ranges from 1.5 to 50 moles, and preferably from 4 to 30 moles, and the amount of the total titanium compound used in step (2) and step (4) ranges from 2 to 150 moles, and preferably from 5 to 60 moles.

The inert solvent used in step (3) and the inert solvent used in step (4) are independently chosen from hexane, heptane, octane, decane, benzene, toluene, xylenes, and mixtures thereof.

Preferably, in step (1) of the process of the invention, a magnesium halide is dissolved in a solvent system consisting of an organic epoxy compound, an organo phosphorus compound and an inert diluent to form a homogeneous solution, and then the internal electron donor compound C is added thereto to form a homogeneous solution. The dissolution temperature may be between 10°C and 150°C, and preferably between 50°C and 120°C, and the upper limit of the temperature is generally not higher than the boiling point of the solvent.

Preferably, in step (2) of the process of the invention, the titanium compound is added dropwise to the solution from step (1) at a temperature of from -30°C to 60°C, and then the co-precipitant A and the co-precipitant B are added thereto to form a mixture.

In a second aspect, the present invention provides a catalyst component obtained by the above-described process according to the invention. The catalyst component of the invention has good particle morphology and narrow particle size distribution.

In a third aspect, the present invention provides a catalyst for the polymerization of an olefin of formula CH₂=CHR, in which R is hydrogen or an alkyl having 1 to 6 carbon atoms, comprising a reaction product of the following components:
(1) the catalyst component according to the invention;
(2) an alkylaluminum compound as a cocatalyst; and
(3) optionally, an external electron-donor compound.

Alkyl aluminum compounds useful as cocatalyst are well known to a person skilled in the art. The alkyl aluminum compounds are preferably those represented by general formula AlRₙX₃₋ₙ, in which R is independently hydrogen or a C₁-C₂₀ hydrocarbon radical, and especially an alkyl, an aralkyl, or an aryl; X is independently a halogen, and especially chloride or bromide; and n has a value meeting 0<n≤3. Examples of the alkyl aluminum compound include, but are not limited to, trialkyl aluminums, such as trimethyl aluminum, triethyl aluminum, triisobutyl aluminum, trioctyl aluminum; alkyl aluminum hydrides, such as diethyl aluminum hydride, diisobutyl aluminum hydride; and alkyl aluminum chlorides, such as diethyl aluminum chloride, di-isobutyl aluminum chloride, ethyl aluminum sesquichloride, ethyl aluminum dichloride, with triethyl aluminum and triisobutyl aluminum being preferred.

The alkyl aluminum compound is used in such an amount that a molar ratio of aluminum therein to titanium in the solid catalyst component (1) ranges from 5 to 5000, and preferably from 20 to 500.

The external electron donor compound may be one of those well-known by a person skilled in the art. Preferred external electron donor compounds useful in the invention include organic silicon compounds of general formula RₙSi(OR')₄₋ₙ, wherein 0 < n ≤ 3, R and R' are independently chosen from optionally halogenated C₁-C₂₀ alkyl, C₂-C₂₀ alkenyl, C₃-C₂₀ cycloalkyl, C₆-C₂₀ aryl, and heteroaryl having 3 to 10 carbon atoms and 1 to 3 heteroatoms chosen from N, O and S, and R may also be a halogen or hydrogen. Examples of the organic silicon compound include, but are not limited to, trimethyl methoxy silane, trimethyl ethoxy silane, trimethyl phenoxy silane, dimethyl dimethoxy silane, dimethyl diethoxy silane, methyl tert-butyl dimethoxy silane, diphenyl dimethoxy silane, diphenyl diethoxy silane, phenyl trimethoxy silane, phenyl triethoxy silane, vinyl trimethoxy silane, cyclohexyl methyl dimethoxy silane, dicyclopentyl dimethoxy silane, 2-ethylpiperidino tert-butyl dimethoxy silane, 1,1,1-trifluoro-2-propyl 2-ethylpiperidino dimethoxy silane and 1,1,1-trifluoro-2-propyl methyl dimethoxy silane.

If used, the external electron donor compound is used in such an amount that a molar ratio of the alkyl aluminum compound to the external electron donor compound ranges from 0.1 to 500, preferably from 1 to 300, and more preferably from 3 to 100.

The component (2) and the optional component (3) can contact and react with the active catalyst component (1) separately or as a mixture.

The above-described catalysts are useful in the polymerization of olefin CH₂=CHR (wherein R is H or an alkyl having 1 to 6 carbon atoms) or a feed containing said olefin and a small amount of diene, if necessary.

Thus, in another aspect, the present invention relates to a process for polymerizing olefin, comprising contacting an olefin of a formula CH₂=CHR, wherein R is H or an alkyl having 1 to 6 carbon atoms, optionally another kind of said olefin as a comonomer, and optionally a diene as a second comonomer, with the catalyst of the invention under polymerization conditions; and recovering the resulting polymer.

The polymerization of olefin(s) may be carried out in liquid phase of liquid monomer or a solution of monomer in an inert solvent, or in gas phase, or in a combination of gas phase and liquid phase, according the known processes. The polymerization is generally carried out at a temperature of from 0°C to 150°C, and preferably from 60°C to 100°C, and at normal or higher pressure. In the polymerization, hydrogen as a regulator of polymer molecular weight may be added to the polymerization reactor to adjust the molecular weight and melt index of a polymer.

In the present process for the preparation of a catalyst component, an ester of polyol having a specific structure or a combination of the ester of polyol and an organic silane is used as co-precipitant in place of the conventional co-precipitant such as phthalic anhydride. Compared with the process for the preparation of a catalyst disclosed in patent application CN1453298A, the present process omits the use of phthalic anhydride, and uses an ester of polyol in a reduced amount. Furthermore, by altering the order of the additions of materials and adjusting the formulation of the dissolution, the present process obtains at a high yield catalyst components having good particle morphology. When used in propylene polymerization, the catalyst components exhibit higher catalytic activities and desired kinetic behavior, and give polymers having less fines.

### Examples

The following examples are provided to further illustrate the present invention and by no means intend to limit the scope thereof.

### Testing methods:

1. Titanium content of a catalyst: measured on a Spectrophotometer, model 721.
2. Particle size distribution of a catalyst: measured through a laser diffraction method in n-hexane dispersant on a Malvern Model 2000 instrument.
3. Melt index of a polymer: measured according to GB/T3682-2000.
4. Isotacticity of a polymer: measured by heptane extraction method carried out as follows: 2 g of dry polymer sample is extracted with boiling heptane in an extractor for 6 hours, then the residual substance is dried to constant weight, and the ratio of the weight of the residual polymer (g) to 2 (g) is regarded as isotacticity.
5. Molecular weight distribution of a polymer, MWD (MWD=Mw/Mn): measured on PL-GPC220, solvent: trichlorobenzene, temperature: 150°C, Standard sample: polystyrene, flow rate: 1.0ml/min, column: 3 x Plgel 10µm MlxED-B 300x7.5nm.

### I. Preparation of solid catalyst components

### Example 1

To a reactor, in which air had been repeatedly replaced with high pure N₂, were charged successively 0.05 moles of anhydrous magnesium dichloride, 0.75 moles of toluene, 0.1 moles of epoxy chloropropane, and 0.033 moles of tributyl phosphate. The reaction mixture was stirred at a stirring speed of 450rpm at a temperature of 60°C for 1.5 hours. To the reactor was added 1.9 mmol of dibutyl phthalate, and the reaction mixture was allowed to react for 1 hour, and then cooled to -28°C. 0.51 Moles of TiCl₄ were added dropwise thereto, followed by the addition of 1.4 mmol of 3,5-heptandiol dibenzoate and 4.4 mmol of diphenyl dimethoxy silane in 0.1 moles of toluene. The reaction mixture was allowed to react for 1 hour. Then the mixture was heated slowly to 85°C over 2 hours, and particulate solids precipitated during the heating. After the temperature reached 85°C, 2.6 mmol of dibutyl phthalate was added. The reaction mixture was maintained at that temperature for 1 hour, and then the mother liquid was filtered off. The residual solids were washed with toluene twice. 0.44 Moles of titanium tetrachloride and 0.7 moles of toluene were added thereto, the reaction mixture was stirred at 110°C for 2 hours, and then the mother liquid was filtered off. The titanium tetrachloride treatment was repeated twice. The solids were washed with hexane five times and dried under vacuum, to give a solid titanium-containing catalyst component.

### Example 2

To a reactor, in which air had been repeatedly replaced with high pure N₂, were charged successively 0.05 moles of anhydrous magnesium dichloride, 0.75 moles of toluene, 0.1 moles of epoxy chloropropane, and 0.033 moles of tributyl phosphate. The reaction mixture was stirred at a stirring speed of 450rpm at a temperature of 60°C for 1.5 hours. To the reactor was added 1.9 mmol of dibutyl phthalate, and the reaction mixture was allowed to react for 1 hour, and then cooled to -28°C. 0.51 Moles of TiCl₄ were added dropwise thereto, followed by the addition of 1.4 mmol of 3,5-heptandiol dibenzoate and 4.4 mmol of diphenyl dimethoxy silane in 0.1 moles of toluene. The reaction mixture was allowed to react for 1 hour. Then the mixture was heated slowly to 85°C over 2 hours, and particulate solids precipitated during the heating. After the temperature reached 85°C, the reaction mixture was maintained at that temperature for 1 hour, and then the mother liquid was filtered off. The residual solids were washed with toluene twice. 0.44 Moles of titanium tetrachloride and 0.7 moles of toluene were added thereto, and the contents were heated to 110°C, with 2.6 mmol of dibutyl phthalate being added thereto in the course of heating. The contents were stirred at 110°C for 1 hour, and then the mother liquid was filtered off. The solids were treated with 0.44 moles of titanium tetrachloride and 0.7 moles of toluene twice, washed with hexane five times, and dried under vacuum, to give a solid titanium-containing catalyst component.

### Example 3

To a reactor, in which air had been repeatedly replaced with high pure N₂, were charged successively 0.05 moles of anhydrous magnesium dichloride, 0.75 moles of toluene, 0.1 moles of epoxy chloropropane, and 0.033 moles of tributyl phosphate. The reaction mixture was stirred at a stirring speed of 450rpm at a temperature of 60°C for 2.5 hours, and then cooled to -28°C. 0.51 Moles of TiCl₄ were added dropwise thereto, followed by the addition of 2.0 mmol of 4-ethyl-3,5-heptandiol dibenzoate and 4.4 mmol of diphenyl dimethoxy silane in 0.1 moles of toluene. The reaction mixture was allowed to react for 1 hour. Then the mixture was heated slowly to 85°C over 2 hours, and particulate solids precipitated during the heating. After the temperature reached 85°C, 4.5 mmol of dibutyl phthalate was added. The reaction mixture was maintained at that temperature for 1 hour, and then the mother liquid was filtered off. The residual solids were washed with toluene twice, and then treated with 0.44 moles of titanium tetrachloride and 0.7 moles of toluene at 110°C for 1 hour. The titanium tetrachloride treatment was repeated twice. The residual solids were washed with hexane five times and dried under vacuum, to give a solid titanium-containing catalyst component.

### Example 4

To a reactor, in which air had been repeatedly replaced with high pure N₂, were charged successively 0.05 moles of anhydrous magnesium dichloride, 0.75 moles of toluene, 0.1 moles of epoxy chloropropane, and 0.033 moles of tributyl phosphate. The reaction mixture was stirred at a stirring speed of 450rpm at a temperature of 60°C for 1.5 hours. To the reactor was added 2.6 mmol of dibutyl phthalate, and the reaction mixture was allowed to react for 1 hour, and then cooled to -28°C. 0.51 Moles of TiCl₄ were added dropwise thereto, followed by the addition of 1.9 mmol of 2,4-pentandiol dibenzoate and 8.8 mmol of diphenyl dimethoxy silane in 0.17 moles of toluene. The reaction mixture was allowed to react for 1 hour. Then the mixture was heated slowly to 85°C over 2 hours, and particulate solids precipitated during the heating. After the temperature reached 85°C, 1.1 mmol of dibutyl phthalate was added. The reaction mixture was maintained at that temperature for 1 hour, and then the mother liquid was filtered off. The residual solids were washed with toluene twice, and then treated with 0.44 moles of titanium tetrachloride and 0.7 moles of toluene at 110°C for 1 hour. The titanium tetrachloride treatment was repeated twice. Then the residual solids were washed with hexane five times and dried under vacuum, to give a solid titanium-containing catalyst component.

### Example 5

Example 4 was repeated, except that the 8.8 mmol of diphenyl dimethoxy silane was replaced with 7.5 mmol of diisopropyl dimethoxy silane.

### Example 6

Example 4 was repeated, except that the 8.8 mmol of diphenyl dimethoxy silane was replaced with 9.0 mmol of tetraethoxy silane.

### Example 7 (Reference)

Example 3 was repeated, except that the 4.4 mmol of diphenyl dimethoxy silane was omitted.

### Example 8

Example 3 was repeated, except that the addition of 4.5 mmol of dibutyl phthalate at 85°C was replaced with addition of 2.4 mmol of 4-ethyl-3,5-heptandiol dibenzoate at 85°C.

### Example 9

To a reactor, in which air had been repeatedly replaced with high pure N₂, were charged successively 0.05 moles of anhydrous magnesium dichloride, 0.28 moles of toluene, and 0.14 moles of 2-ethylhexanol. The reaction mixture was stirred at a stirring speed of 450rpm at a temperature of 95°C for 3 hours, to form a homogeneous solution of alcohol adduct. 1.4 Mmol of 3,5-heptandiol dibenzoate and 4.4 mmol of diphenyl dimethoxy silane were added thereto, and the reaction mixture was stirred for 30min and then cooled to room temperature.

The above-prepared solution was transferred to a reactor, in which air had been repeatedly replaced with high pure N₂, containing 0.55 moles of TiCl₄ and 0.66 moles of toluene at -20°C, and the resultant mixture was stirred at -20 °C for 5 hours. Then the reaction mixture was heated slowly to 110°C over 2 hours, 4.5 mmol of diisobutyl phthalate was added thereto, and the reaction was allowed to continue for 1 hour. Upon the completion of the reaction, the liquid was filtered off. To the reactor were added 0.44 moles of titanium tetrachloride and 0.66 moles of toluene, and the mixture was stirred at 110°C for 1 hour, and then the liquid was filtered off. Again, to the reactor were added 0.44 moles of titanium tetrachloride and 0.66 moles of toluene, and the mixture was stirred at 110°C for 1 hour, and then the liquid was filtered off. The residues were washed with hexane five times and dried, to give a solid titanium-containing catalyst component.

### Example 10

To a reactor, in which air had been repeatedly replaced with high pure N₂, were charged successively 0.05 moles of anhydrous magnesium dichloride, 0.28 moles of toluene, and 0.14 moles of 2-ethylhexanol. The reaction mixture was stirred at a stirring speed of 450rpm at a temperature of 95°C for 3 hours, to form a homogeneous solution of alcohol adduct. Then the solution was cooled to room temperature.

The above-prepared alcohol adduct solution was transferred to a reactor, in which air had been repeatedly replaced with high pure N₂, containing 0.55 moles of TiCl₄ and 0.66 moles of toluene at -20°C, and the resultant mixture was stirred at -20°C for 30 min. Then 1.4 mmol of 3,5-heptandiol dibenzoate and 4.4 mmol of diphenyl dimethoxy silane were added thereto, and the reaction mixture was stirred for further 5 hours. Then the reaction mixture was heated slowly to 110°C over 2 hours, 4.5 mmol of diisobutyl phthalate was added thereto, and the reaction was allowed to continue for 1 hour. Upon the completion of the reaction, the liquid was filtered off. To the reactor were added 0.44 moles of titanium tetrachloride and 0.66 moles of toluene, and the mixture was stirred at 110°C for I hour, and then the liquid was filtered off. Again, to the reactor were added 0.44 moles of titanium tetrachloride and 0.66 moles of toluene, and the mixture was stirred at 110°C for 1 hour, and then the liquid was filtered off. The residual solids were washed with hexane five times and dried, to give a solid titanium-containing catalyst component.

### Comparative Example 1

To a reactor, in which air had been repeatedly replaced with high pure N₂, were charged successively 0.05 moles of anhydrous magnesium dichloride, 0.88 moles of toluene, 0.05 moles of epoxy chloropropane, and 12.5 ml of tributyl phosphate. The reaction mixture was stirred at a stirring speed of 450rpm at a temperature of 60°C for 2 hours. To the reactor was added 0.01 moles of phthalic anhydride, and the reaction mixture was allowed to react for 1 hour, and then cooled to -28°C. 0.51 Moles of TiCl₄ were added dropwise thereto, and the temperature was raised slowly to 85°C, with 8.0 mmol of dibutyl phthalate being added when the temperature reached 80°C. After the temperature reached 85°C, the reaction mixture was maintained at that temperature for 1 hour, and then the mother liquid was filtered off. The residual solids were washed with 0.95 moles of toluene twice, and then treated with 0.36 moles of titanium tetrachloride and 0.57 moles of toluene at 110°C for 2 hours, and then the liquid was filtered off. The titanium tetrachloride treatment was repeated once. The resultant solids were washed with hexane five times and dried, to give a solid titanium-containing catalyst component.

### Comparative Example 2

Example 4 was repeated, except that the 1.9 mmol of 2,4-pentandiol dibenzoate was omitted. In the course of heating to 85°C, particulate solids precipitated, but the solids were very fine and did not settled so that no solid titanium-containing catalyst component could be obtained.

### Comparative Example 3

To a reactor, in which air had been repeatedly replaced with high pure N₂, were charged successively 0.05 moles of anhydrous magnesium dichloride, 0.9 moles of toluene, 0.05 moles of epoxy chloropropane, and 0.046 moles of tributyl phosphate. The reaction mixture was stirred at a stirring speed of 450rpm at a temperature of 60°C for 2 hours. To the reactor was added 0.01 moles of phthalic anhydride, and the contents were allowed to react for 1 hour, and then cooled to -28°C. 0.51 Moles of TiCl₄ were added dropwise thereto, and the mixture was heated slowly to 85°C over 2 hours, with 5.0 mmol of 4-ethyl-3,5-heptandiol dibenzoate being added when the temperature reached 75°C. After the temperature reached 85°C, the reaction mixture was maintained at that temperature for 1 hour, and then the mother liquid was filtered off. The residual solids were washed with 0.95 moles of toluene twice, and then treated with 0.36 moles of titanium tetrachloride and 0.57 moles of toluene at 110°C for 2 hours, and then the liquid was filtered off. The titanium tetrachloride treatment was repeated once. The resultant solids were washed with hexane five times and dried, to give a solid titanium-containing catalyst component

### Comparative Example 4

To a reactor, in which air had been repeatedly replaced with high pure N₂, were charged successively 0.05 moles of anhydrous magnesium dichloride, 0.11 moles of decane, and 0.15 moles of 2-ethylhexanol. The contents were stirred at a stirring speed of 450rpm at a temperature of 130°C for 2 hours, and 8.1 mmol of phthalic anhydride was added thereto. The reaction was allowed to continue for 1 hour, to form a homogeneous solution of alcohol adduct. Then the solution was cooled to room temperature.

The above-prepared homogeneous solution of alcohol adduct was transferred to a reactor, in which air had been repeatedly replaced with high pure N₂, containing 1.3 moles of TiCl₄ at -20°C. and the resultant mixture was stirred for 4 hours. Then the reaction mixture was heated to 110°C, 12.7 mmol of diisobutyl phthalate was added thereto, and the contents were stirred for further 2 hours. Upon the completion of the reaction, the liquid was filtered off. To the reactor were added 1.6 moles of titanium tetrachloride, and the mixture was stirred at 110 °C for 2 hours, and then the liquid was filtered off. The residual solids were washed with hexane five times and dried, to give a solid titanium-containing catalyst component.

### Comparative Example 5

Comparative Example 4 was repeated, except that the 12.7 mmol of diisobutyl phthalate was replaced with 12.7 mmol of 4-ethyl-3,5-heptandiol dibenzoate.

### II. Propylene Polymerization

At room temperature, to a 5L autoclave, in which air had been completely replaced with gaseous propylene, were added 5 ml of a 0.5 M solution of triethyl aluminum in hexane, 1 ml of a 0.11 M solution of cyclohexyl methyl dimethoxy silane (CHMMS) in hexane, and 10mg of a solid catalyst component suspended in 10ml of hexane. Then to the autoclave were introduced 1.0 liters (standard volume) of hydrogen gas and 1.15Kg of liquid propylene, and the contents were heated to 70°C within 10min with stirring. Polymerization was allowed to continue for a period of time at 70°C. The results are shown in Table 2 below.

**Table 1-1 Results of catalyst components**

| Item | Yield* % | Ti % | Particle size distribution of catalyst component | | | |
|---|---|---|---|---|---|---|
| | | | d(0.1) | d(0.5) | d(0.9) | Span |
| Example 1 | 131.2 | 2.64 | 19.2 | 26.6 | 37.1 | 0.67 |
| Example 2 | 143.1 | 2.52 | 14.5 | 24.1 | 34.0 | 0.81 |
| Example 3 | 148 | 2.57 | 14.2 | 20.7 | 30.3 | 0.78 |
| Comp. Ex. 1 | 124 | 2.13 | 11.6 | 22.6 | 37.6 | 1.15 |

| | | | | | | |
|---|---|---|---|---|---|---|
| * Yield was calculated according to the following equation: Yield of catalyst component % = mass of the obtained catalyst component / mass of the magnesium dichloride used×100% | | | | | | |

It can be seen from the data shown in Table 1-1 that, compared with the catalyst component obtained by a process using phthalic anhydride as co-precipitant, the catalyst components prepared by the process of the invention have higher yields, better adjustability of particle size, and narrower particle size distribution.

**Table 2-1 Propylene polymerization results**

| Item | Activity for 1h kgPP/gCat | Activity for 2h kgPP/gCat | BD g/cm³ | MI g/10min | II % | MWD | Polymer fines <0.18mm |
|---|---|---|---|---|---|---|---|
| Example 1 | 49.2 | 84.1 | 0.47 | 3.87 | 97.9 | 6.3 | 0.4% |
| Example 2 | 43.1 | 68.3 | 0.47 | 3.08 | 98.0 | 6.6 | 0.4% |
| Example 3 | 49.0 | 81.2 | 0.45 | 3.86 | 98.1 | 6.5 | 0.2% |
| Comp. Ex. 1 | 29.0 | 52.1 | 0.45 | 3.82 | 98.8 | 4.6 | 0.7% |

It can be seen from the results shown in Table 2-1 that the catalyst components prepared by the process of the invention have higher polymerization activities, and the resulting polymers have less fines and good property with respect to isotacticity, melt index, bulk density, and molecular weight distribution.

**Table 1-2 Results of catalyst components**

| Item | Yield % | Ti % | Particle size distribution of catalyst component | | | |
|---|---|---|---|---|---|---|
| | | | d(0.1) | d(0.5) | d(0.9) | Span |
| Example 4 | 130.8 | 2.69 | 13.7 | 19.3 | 27.4 | 0.71 |
| Example 5 | 126.2 | 2.6 | 10.6 | 17.6 | 24.8 | 0.81 |
| Example 6 | 145.6 | 3.19 | 17.6 | 28.5 | 40.3 | 0.79 |
| Example 7* | 149 | 2.53 | 14.3 | 23.6 | 40.2 | 1.10 |
| Comp. Ex. 2 | - | - | - | - | - | - |

| | | | | | | |
|---|---|---|---|---|---|---|
| *Reference | | | | | | |

It can be seen from the results shown in Table 1-2 that, by the present process for the preparation of a catalyst component, it is possible to obtain catalyst component products having different average particle size by using different combination of the ester of diol and the silane as co-precipitant. If the silane as the co-precipitant is omitted, the particle morphology of the catalyst component might be affected, and if the ester of diol as the co-precipitant is omitted, no catalyst component can be obtained.

**Table 2-2 Propylene polymerization results**

| Item | Activity for 1h kgPP/gCat | Activity for 2h kgPP/gCat | BD g/cm³ | MI g/10min | II % | MWD | Polymer fines <0.18mm |
|---|---|---|---|---|---|---|---|
| Example 4 | 50.2 | 86.7 | 0.46 | 3.22 | 98.2 | 6.5 | 0.2% |
| Example 5 | 43.5 | 68.1 | 0.47 | 1.79 | 99.1 | 6.3 | 0.3% |
| Example 6 | 52.1 | 90.5 | 0.47 | 2.4 | 98.5 | 6.2 | 0.5% |
| Example 7* | 45.8 | 75.2 | 0.45 | 3.81 | 98.0 | 6.4 | 0.1% |
| Comp. Ex. 2 | - | - | - | - | - | - | - |

| | | | | | | | |
|---|---|---|---|---|---|---|---|
| *Reference | | | | | | | |

It can be seen from the results shown in Table 2-2 that, by the present process for the preparation of a catalyst component, it is possible to obtain catalyst components having good particle morphology, different hydrogen response property, and different isotacticity property by using different combination of the ester of diol and the silane as co-precipitant.

**Table 1-3 Results of catalyst components**

| Item | Yield % | Ti % | Particle size distribution of catalyst component | | | |
|---|---|---|---|---|---|---|
| | | | d(0.1) | d(0.5) | d(0.9) | Span |
| Example 3 | 148 | 2.57 | 14.2 | 20.7 | 30.3 | 0.78 |
| Example 8 | 147 | 3.15 | 15.3 | 23.6 | 36.2 | 0.88 |
| Comp. Ex. 3 | 138 | 3.56 | 11.4 | 21.9 | 37.4 | 1.19 |

It can be seen from the results shown in Table 1-3 that the present process, which uses an ester of diol rather than phthalic anhydride as co-precipitant, may obtain catalyst components at higher yields, the amount of the ester of diol as co-precipitant is less, and the catalyst components have better adjustability of particle size and narrower particle size distribution.

**Table 2-3 Propylene polymerization results**

| Item | Activity for 1h kgPP/gCat | Activity for 2h kgPP/gCat | BD g/cm³ | MI g/10min | II % | MWD | Polymer fines <0.18mm |
|---|---|---|---|---|---|---|---|
| Example 3 | 49.0 | 81.2 | 0.45 | 3.86 | 98.1 | 6.5 | 0.2% |
| Example 8 | 47.5 | 79.1 | 0.46 | 3.15 | 98.4 | 7.1 | 0.3% |
| Comp. Ex. 3 | 48.2 | 63.5 | 0.45 | 2.55 | 98.3 | 7.5 | 0.4% |

It can be seen from the data shown in Table 2-3 that, compared with the catalyst component obtained by using phthalic anhydride as co-precipitant and using an ester of diol as internal electron donor, the catalyst components of the invention have higher polymerization activities, and the activity declines more slowly.

**Table 1-4 Results of catalyst components**

| Item | Yield % | Ti % | Particle size distribution of catalyst component | | | |
|---|---|---|---|---|---|---|
| | | | d(0.1) | d(0.5) | d(0.9) | Span |
| Example 9 | 135.1 | 2.81 | 17.4 | 27.0 | 43.7 | 0.97 |
| Example 10 | 132.5 | 2.78 | 15.2 | 26.1 | 36.5 | 0.82 |
| Comparative Example 4 | 126.1 | 2.39 | 15.6 | 26.7 | 38.7 | 0.76 |
| Comp. Ex. 5 | 136.2 | 3.38 | 13.3 | 25.4 | 36.2 | 0.90 |

It can be seen from the data shown in Table 1-4 that, compared with the preparation process using phthalic anhydride as co-precipitant, the preparation process of the invention may obtain catalyst components having good particle morphology at higher yields.

**Table 2-4 Propylene polymerization results**

| Item | Activity for 1h kgPP/gCat | Activity for 2h kgPP/gCat | BD g/cm³ | MI g/10min | II % | MWD | Polymer fines <0.18mm |
|---|---|---|---|---|---|---|---|
| Example 9 | 48.6 | 84.3 | 0.45 | 2.64 | 98.0 | 6.7 | 0.2% |
| Example 10 | 49.2 | 86.3 | 0.45 | 2.37 | 98.5 | 6.3 | 0.3% |
| Comp. Ex. 4 | 29.6 | 51.7 | 0.46 | 5.12 | 97.3 | 5.1 | 0.3% |
| Comp. Ex. 5 | 46.2 | 61.9 | 0.45 | 3.21 | 98.2 | 6.9 | 0.4% |

It can be seen from the data shown in Table 2-4 that the catalyst components prepared by the process of the invention have higher activities, with the activities declining more slowly, that the catalyst components have good property with respect to isotacticity, melt index, bulk density, and molecular weight distribution, and that the resultant polymers contain less fines.

## Claims

1. A process for the preparation of a catalyst component for olefin polymerization, comprising the steps of:
(1) dissolving a magnesium halide in a solvent system to form a homogeneous solution, and optionally, adding an internal electron donor compound C thereto before, during, or after the dissolving;
(2) combining a titanium compound and a co-precipitant with the solution from step (1) to form a mixture;
(3) slowly heating the mixture from step (2) to a temperature of from 60 to 110°C, with an internal electron donor compound D being optionally added during or after the heating, and upon the temperature being reached, stirring the mixture for 0.5 to 8 hours, then removing the mother liquid through filtration, and washing the residual solids with an inert solvent to obtain magnesium- and titanium-containing solids; and
(4) treating the magnesium- and titanium-containing solids from step (3) with a titanium compound and an optional internal electron donor compound E in an inert solvent one or more times, and then washing the solids with an inert solvent to obtain a catalyst component;
wherein the co-precipitant is a combination of co-precipitant A and co-precipitant B, the co-precipitant A is at least one ester of diol represented by a general formula (I) : 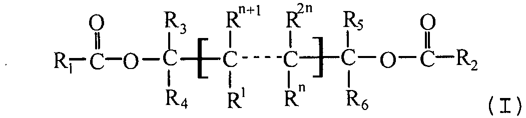
wherein R₁ to R₆ and R¹ to R²ⁿ are independently chosen from hydrogen, halogen, optionally substituted linear or branched C₁-C₂₀ alkyl, C₃-C₂₀ cycloalkyl, C₆-C₂₀ aryl, C₇-C₂₀ alkaryl, C₇-C₂₀ aralkyl, C₂-C₁₀ alkenyl, and C₁₀-C₂₀ fused aryl, with the proviso that R₁ and R₂ are not hydrogen; one or more of R₃ to R₆ and R¹ to R²ⁿ are optionally linked to form a ring; and n is an integer of from 0 to 10,
the co-precipitant B is at least one organic silane represented by a general formula (II) : R^{I}ₐR^{II}_{b}Si(OR^{III})_{c}, wherein R^{I} and R^{II} are independently chosen from hydrogen, halogen, optionally substituted linear or branched C₁ to C₁₀ alkyl, C₂ to C₁₀ alkenyl, C₃ to C₁₀ cycloalkyl, C₆ to C₁₀ aryl, and heteroaryl having 3 to 10 carbon atoms and 1 to 3 heteroatoms chosen from N, O and S; R^{III} is independently chosen from C₁ to C₁₀ alkyl, C₃ to C₁₀ cycloalkyl and C₆ to C₁₀ aryl; and wherein a and b are independently an integer of from 0 to 4, c is an integer of from 0 to 4, and (a+b+c)=4.

2. The process of claim 1, wherein the co-precipitant A is chosen from esters of diol represented by a general formula (III): 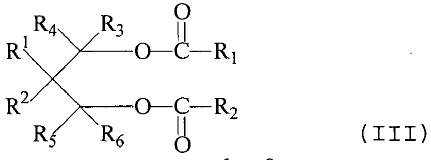 wherein R₁ to R₆ and R¹-R² are as defined for the general formula (I) in claim 1.

3. The process of claim 1, wherein in the formula (II), R^{I} and R^{II} are independently chosen from C₁ to C₈ alkyl, C₃ to C₆ cycloalkyl, and C₆ to C₁₀ aryl, and R^{III} is a C₁ to C₁₀ alkyl.

4. The process of any one of claims 1 to 3, wherein the amount of the co-precipitant A used ranges from 0.001 to 0.3 moles, and the amount of the co-precipitant B used ranges from 0.01 to 0.5 moles, relative to one mole of the magnesium halide.

5. The process of any one of claims 1 to 4, having at least one of the following features:
- the magnesium halide is chosen from magnesium dihalides, water or alcohol complexes of magnesium dihalides, derivatives of magnesium dihalides wherein one halogen atom in the magnesium dihalides is replaced with an alkoxy or a halogenated alkoxy, and mixtures thereof;
- the solvent system used in step (1) consists of an organic epoxy compound, an organo phosphorus compound and an optional inert diluent or, alternatively, of an alcohol compound and an optional inert diluent, with the alcohol compound being chosen from linear or branched aliphatic alcohol having 1 to 10 carbon atoms, cycloaliphatic alcohol having 3 to 12 carbon atoms, alkaryl alcohol having 6 to 20 carbon atoms, aralkyl alcohol having 6 to 20 carbon atoms, and mixtures thereof;
- step (2) is carried out as follows: at a temperature of from -30 °C to 60 °C, a titanium compound is combined with the solution from step (1), and then a co-precipitant is added thereto to form a mixture; alternatively, a co-precipitant is added to the solution from (1), and then at a temperature of from -30 °C to 60 °C, the solution is combined with a titanium compound to form a mixture;
- the internal electron donor compounds C, D, and E are independently chosen from the esters of diol represented by the general formula (I), alkyl esters of aliphatic or aromatic mono-basic carboxylic acids, alkyl esters of aliphatic or aromatic poly-basic carboxylic acids, aliphatic ethers, cycloaliphatic ethers, aliphatic katones, and mixtures thereof;
- relative to one mole of the magnesium halide, the amount of the electron donor compound C used ranges from 0 to 3 moles, the amount of the electron donor compound D plus E used ranges from 0 to 5 moles, and the amount of the electron donor compound C+D+E used ranges from 0 to 5 moles;
- the titanium compound used in step (2) and the titanium compound used in step (4) are the same or different, and they have a general formula: TiXₙ(OR)₄₋ₙ, in which R is independently a C₁-C₂₀ hydrocarbyl group, X is independently a halogen, and n = 1 to 4; and
relative to one mole of the magnesium halide, the amount of the titanium compound used in step (2) ranges from 1.5 to 50 moles, and the amount of the total titanium compound used in step (2) and step (4) ranges from 2 to 150 moles.

6. The process of claim 1, wherein the solvent system used in step (1) consists of an organic epoxy compound, an organo phosphorus compound and an optional inert diluent,
wherein the organic epoxy compound comprises at least one of aliphatic epoxy compounds and diepoxy compounds, halogenated aliphatic epoxy compounds and diepoxy compounds, glycidyl ether, and inner ethers, having from 2 to 8 carbon atoms;
wherein the organo phosphorus compound comprises at least one of hydrocarbyl esters of orthophosphoric acid, halogenated hydrocarbyl esters of orthophosphoric acid, hydrocarbyl esters of phosphorous acid, and halogenated hydrocarbyl esters of phosphorous acid;
wherein the optional inert diluent is chosen from hexane, heptane, octane, decane, benzene, toluene, xylene, 1,2-dichloroethane, chlorobenzene, and other hydrocarbon and halogenated hydrocarbon solvents; and
wherein, relative to one mole of the magnesium halide, the amount of the organic epoxy compound used ranges from 0.2 to 10 moles; the amount of the organo phosphorus compound used ranges from 0.1 to 3 moles; and the amount of the inert diluent, if used, ranges from 0.1 to 10 liters per mole of the magnesium halide.

7. The process of claim 1, wherein the solvent system used in step (1) consists of an alcohol compound and an optional inert diluent, with the alcohol compound being chosen from linear or branched aliphatic alcohol having 1 to 10 carbon atoms, cycloaliphatic alcohol having 3 to 12 carbon atoms, alkaryl alcohol having 6 to 20 carbon atoms, aralkyl alcohol having 6 to 20 carbon atoms, and mixtures thereof, and the amount of the alcohol used ranging from 2.0 to 6.0 moles, relative to one mole of the magnesium halide.

8. The process of claim 1, wherein the internal electron donor compounds C, D, and E are independently chosen from phthalates, malonates, succinates, glutarates, pivalates, adipates, sebacates, maleates, naphthalene dicarboxylates, trimellitates, benzene-1,2,3-tricarboxylates, pyromellitates, and carbonates.

9. A catalyst component obtained by a process according to any one of claims 1 to 8.

10. A catalyst for the polymerization of an alpha-olefin of a formula CH₂=CHR, in which R is hydrogen or an alkyl having 1 to 6 carbon atoms, comprising a reaction product of the following components:
1) the catalyst component according to claim 9;
2) an alkylaluminum compound as a cocatalyst; and
3) optionally, an external electron-donor compound.

11. The catalyst of claim 10, having at least one of the following features:
- the alkyl aluminum compound is a compound represented by a general formula AlRₙX₃₋ₙ, in which R is independently hydrogen or a C₁-C₂₀ hydrocarbon radical; X is independently a halogen; and n has a value meeting 0<n≤3;
- the alkyl aluminum compound is used in such an amount that a molar ratio of aluminum therein to titanium in the solid catalyst component (1) ranges from 5 to 5000;
- the external electron donor compound is an organic silicon compound of a general formula RₙSi(OR')₄₋ₙ, wherein 0 < n ≤ 3, R and R' are independently chosen from optionally halogenated C₁-C₂₀ alkyl, C₂-C₂₀ alkenyl, C₃-C₂₀ cycloalkyl, C₆-C₂₀ aryl, and heteroaryl having 3 to 10 carbon atoms and 1 to 3 heteroatoms chosen from N, O and S, and R may also be halogen or hydrogen; and
- the external electron donor compound is used in such an amount that a molar ratio of the alkyl aluminum compound to the external electron donor compound ranges from 0.1 to 500.

12. A process for polymerizing olefin, comprising
contacting an olefin of a formula CH₂=CHR, wherein R is H or an alkyl having 1 to 6 carbon atoms, optionally another kind of said olefin as a comonomer, and optionally a diene as a second comonomer, with the catalyst of claim 10 or 11 under polymerization conditions; and
recovering the resulting polymer.

## Patentansprüche

1. Verfahren zur Herstellung einer Katalysatorkomponente für die Olefinpolymerisation, enthaltend folgende Schritte:
(1) Auflösen eines Magnesiumhalogenides in einem Lösungsmittelsystem, zur Bildung einer homogenen Lösung und wahlweise Zugabe einer internen Elektronendonorverbindung C dazu während oder nach dem Auflösen,
(2) Kombinieren einer Titanverbindung und eines Co-Ausfällmittels mit der Lösung von Schritt (1), zur Bildung einer Mischung,
(3) langsames Erwärmen der Mischung von Schritt (2) auf eine Temperatur von 60 bis 110°C mit einer internen Elektronendonorverbindung, die wahlweise während oder nach dem Erwärmen zugegeben wird, und wenn die Temperatur erreicht ist, Rühren der Mischung für 0,5 bis 8 Stunden, anschließendes Entfernen der Mutterlösung durch Filtration und Waschen der restlichen Feststoffe mit einem inerten Lösungsmittel, unter Erhalt von Magnesium- und Titan-haltigen Feststoffen, und
(4) Behandeln der Magnesium- und Titan-haltigen Feststoffe von Schritt (3) mit einer Titanverbindung und einer wahlweisen internen Elektronendonorverbindung E in einem inerten Lösungsmittel ein oder mehrere Male und anschließendes Waschen der Feststoffe mit einem inerten Lösungsmittel, unter Erhalt einer Katalysatorkomponente,
worin das Co-Ausfällmittel eine Kombination von Co-Ausfällmittel A und Co-Ausfällmittel B ist, wobei das Co-Ausfällmittel A zumindest ein Ester von Diol ist, dargestellt durch eine allgemeine Formel (I): 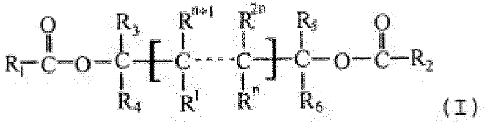
worin R₁ bis R₆ und R¹ bis R²ⁿ unabhängig ausgewählt sind aus Wasserstoff, Halogen, wahlweise substituiertem linearem oder verzweigtem C₁₋₂₀-Alkyl, C₃₋₂₀-Cycloalkyl, C₆₋₂₀-Aryl, C₇₋₂₀-Alkaryl, C₇₋₂₀-Aralkyl, C₂₋₁₀-Alkenyl und C₁₀₋₂₀-verschmolzenem Aryl, mit dem Vorbehalt, dass R₁ und R₂ nicht Wasserstoff sind; eines von R₃ bis R₆ und R¹ bis R²ⁿ wahlweise gebunden sind, zur Bildung eines Rings; und n eine ganze Zahl von 0 bis 10 ist,
wobei das Co-Ausfällmittel B zumindest ein organisches Silan mit der allgemeinen Formel (II) ist: R^{I}ₐR^{II}_{b}Si(OR^{III})_{c}, worin R^{I} und R^{II} unabhängig ausgewählt sind aus Wasserstoff, Halogen, wahlweise substituiertem linearem oder verzweigtem C₁₋₁₀-Alkyl, C₂₋₁₀-Alkenyl, C₃₋₂₀-Cycloalkyl, C₆₋₁₀-Aryl und Heteroaryl mit 3 bis 10 Kohlenstoffatomen und 1 bis 3 Heteroatomen, ausgewählt aus N, O und S; R^{III} unabhängig ausgewählt ist aus C₁₋₁₀-Alkyl, C₃₋₁₀-Cycloalkyl und C₆₋₁₀-Aryl; und worin a und b unabhängig eine ganze Zahl von 0 bis 4 sind, c eine ganze Zahl von 0 bis 4 ist und (a+b+c)=4 ist.

2. Verfahren gemäß Anspruch 1, worin das Co-Ausfällmittel (A) ausgewählt ist aus Estern von Diol, dargestellt durch die allgemeine Formel (III): 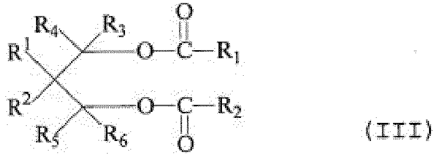 worin R₁ bis R₆ und R¹ bis R² wie für die allgemeine Formel (I) in Anspruch 1 definiert sind.

3. Verfahren gemäß Anspruch 1, worin in der Formel (II) R^{I} und R^{II} unabhängig ausgewählt sind aus C₁₋₈-Alkyl, C₃₋₆-Cycloalkyl und C₆₋₁₀-Aryl und R^{III} C₁₋₁₀-Alkyl ist.

4. Verfahren gemäß einem der Ansprüche 1 bis 3, worin die Menge des verwendeten Co-Ausfällmittels (A) im Bereich von 0,001 bis 0,3 mol ist und die Menge des verwendeten Co-Ausfällmittels (B) im Bereich von 0,01 bis 0,5 mol in Bezug auf ein Mol des Magnesiumhalogenides ist.

5. Verfahren gemäß einem der Ansprüche 1 bis 4, mit zumindest einem der folgenden Merkmale:
- das Magnesiumhalogenid wird ausgewählt aus Magnesiumdihalogeniden, Wasser oder Alkoholkomplexen von Magnesiumdihalogeniden, Derivaten von Magnesiumdihalogeniden, worin ein Halogenatom in den Magnesiumdihalogeniden durch ein Alkoxy oder ein halogeniertes Alkoxy ersetzt ist; und Mischungen davon;
- das Lösungsmittelsystem, das beim Schritt (1) verwendet wird, besteht aus einer organischen Epoxyverbindung, Organophosphorverbindung und einem wahlweisen inerten Verdünnungsmittel oder alternativ aus einer Alkoholverbindung und einem optionalen inerten Verdünnungsmittel, wobei die Alkoholverbindung ausgewählt ist aus linearem oder verzweigtem, aliphatischem Alkohol mit 1 bis 10 Kohlenstoffatomen, cycloaliphatischem Alkohol mit 3 bis 12 Kohlenstoffatomen, Alkarylalkohol mit 6 bis 20 Kohlenstoffatomen, Aralkylalkohol mit 6 bis 20 Kohlenstoffatomen und Mischungen davon,
- Schritt (2) wird wie folgt durchgeführt: bei einer Temperatur von -30 bis 60°C wird eine Titanverbindung mit der Lösung von Schritt (1) kombiniert und dann wird ein Co-Ausfällmittel zugegeben, zur Bildung einer Mischung; alternativ wird ein Co-Ausfällmittel zu der Lösung von (1) gegeben und dann wird bei einer Temperatur von -30 bis 60°C die Lösung mit einer Titanverbindung kombiniert, zur Bildung einer Mischung,
- die internen Elektronendonor-Verbindungen C, D und E werden unabhängig ausgewählt aus den Estern von Diol, dargestellt durch die allgemeine Formel (I), Alkylestern von aliphatischen oder aromatischen monobasischen Carbonsäuren, Alkylestern von aliphatischen oder aromatischen polybasischen Carbonsäuren, aliphatischen Ethern, cycloaliphytischen Ethern, aliphatischen Ketonen und Mischungen davon,
- in Bezug auf ein Mol Magnesiumhalogenid liegt die Menge der verwendeten Elektronendonorverbindung C im Bereich von 0 bis 3 mol, die Menge der verwendeten Elektronendonorverbindung D plus E liegt im Bereich von 0 bis 5 mol und die Menge der verwendeten Elektronendonorverbindung C+D+E liegt im Bereich von 0 bis 5 mol,
- die im Schritt (2) verwendete Titanverbindung und die im Schritt (4) verwendete Titanverbindung sind gleich oder verschieden und haben die allgemeine Formel: TiXₙ(OR)₄₋ₙ, worin R unabhängig eine C₁₋₂₀-Kohlenwasserstoffgruppe ist, X unabhängig ein Wasserstoff ist und n 0 1 bis 4 ist, und
- in Bezug auf ein Mol Magnesiumhalogenid liegt die Menge der im Schritt (2) verwendeten Titanverbindung im Bereich von 1,5 bis 50 mol und die Menge der in Schritt (2) und im Schritt (4) verwendeten gesamten Titanverbindung im Bereich von 2 bis 150 mol.

6. Verfahren gemäß Anspruch 1, worin das im Schritt (1) verwendete Lösungsmittelsystem aus einer organischen Epoxyverbindung, Organophosphorverbindung und einem wahlweisen inerten Verdünnungsmittel besteht,
worin die organische Epoxyverbindung zumindest eine von aliphatischen Epoxyverbindungen und Diepoxyverbindungen, halogenierten aliphatischen Epoxyverbindung und Diepoxyverbindungen, Glycidylether und inneren Ethern mit 2 bis 8 Kohlenstoffatomen enthält,
worin die Organophosphorverbindung zumindest einen von Kohlenwasserstoffestern von Orthophosphorsäure, halogenierten Kohlenwasserstoffestern von Orthophosphorsäure, Kohlenwasserstoffestern von phosphoriger Säure und halogenierten Kohlenwasserstoffestern von phosphoriger Säure enthält,
worin das wahlweise inerte Verdünnungsmittel ausgewählt ist aus Hexan, Heptan, Octan, Decan, Benzol, Toluol, Xylol, 1,2-Dichlorethan, Chlorbenzol und anderen Kohlenwasserstoff- und halogenierten Kohlenwasserstofflösungsmitteln; und
worin in Bezug auf ein Mol Magnesiumhalogenid die Menge der verwendeten organischen Epoxyverbindung im Bereich von 0,2 bis 10 mol; die Menge der verwendeten Organophosphorverbindung im Bereich von 0,1 bis 3 mol und die Menge des inerten Verdünnungsmittels, falls verwendet, im Bereich von 0,1 bis 10 l pro Mol Magnesiumhalogenid liegt.

7. Verfahren gemäß Anspruch 1, worin das im Schritt (1) verwendete Lösungsmittelsystem aus einer Alkoholverbindung und einem wahlweisen inerten Verdünnungsmittel besteht, wobei die Alkoholverbindung ausgewählt ist aus linearem oder verzweigtem aliphatischem Alkohol mit 1 bis 10 Kohlenstoffatomen, cycloaliphatischem Alkohol mit 3 bis 12 Kohlenstoffatomen, Alkarylalkohol mit 6 bis 20 Kohlenstoffatomen, Aralkylalkohol mit 6 bis 20 Kohlenstoffatomen und Mischungen davon und die Menge des verwendeten Alkohols im Bereich von 2,0 bis 6,0 mol in Bezug auf ein Mol Magnesiumhalogenid liegt.

8. Verfahren gemäß Anspruch 1, worin die internen Elektronendonorverbindungen C, D und E unabhängig ausgewählt sind aus Phthalaten, Malonaten, Succinaten, Glutaraten, Pivalaten, Adipaten, Sebacaten, Maleaten, Naphthalindicarboxylaten, Trimellitaten, Benzol-1,2,3-tricarboxylaten, Pyromellitaten und Carbonaten.

9. Katalysatorkomponente, erhalten durch ein Verfahren gemäß einem der Ansprüche 1 bis 8.

10. Katalysator zur Polymerisation eines alpha-Olefins der Formel CH₂=CHR, worin R Wasserstoff oder ein Alkyl mit 1 bis 6 Kohlenstoffatomen ist, enthaltend ein Reaktionsprodukt der folgenden Komponenten:
1) die Katalysatorkomponente gemäß Anspruch 9,
2) eine Alkylaluminiumverbindung als Co-Katalysator und
3) wahlweise eine externe Elektronendonorverbindung.

11. Katalysator gemäß Anspruch 10 mit zumindest einem der folgenden Merkmale:
- die Alkylaluminiumverbindung ist eine Verbindung mit der allgemeinen Formel AlRₙX₃₋ₙ, worin R unabhängig Wasserstoff oder ein C₁₋₂₀-Kohlenwasserstoffradikal ist, X unabhängig ein Halogen ist und n einen Wert hat, der 0<n≤3 erfüllt,
- die Alkylaluminiumverbindung wird in einer solchen Menge verwendet, dass ein molares Verhältnis von Aluminium darin zu Titan in der festen Katalysatorkomponente (1) im Bereich von 5 bis 5.000 liegt,
- die externe Elektronendonorverbindung ist eine organische Siliciumverbindung der allgemeinen Formel RₙSi(OR')₄₋ₙ, worin 0 < n ≤ 3, R und R' unabhängig ausgewählt sind aus wahlweise halogeniertem C₁₋₂₀-Alkyl, C₂₋₂₀-Alkenyl, C₃₋₂₀-Cycloalkyl, C₆₋₂₀-Aryl und Heteroaryl mit 3 bis 10 Kohlenstoffatomen und 1 bis 3 Heteroatomen, ausgewählt aus N, O und S und R ebenfalls Halogen oder Wasserstoff sein kann, und
- die externe Elektronendonorverbindung wird in einer solchen Menge verwendet, dass ein molares Verhältnis der Alkylaluminiumverbindung zu der externen Elektronendonorverbindung im Bereich von 0,1 bis 500 liegt.

12. Verfahren zur Polymerisation von Olefin, enthaltend das Kontaktieren eines Olefins der Formel CH₂=CHR, worin R H oder ein Alkyl mit 1 bis 6 Kohlenstoffatomen ist, wahlweise einer anderen Art des Olefins als Comonomer und wahlweise eines Diens als zweites Comonomer mit dem Katalysator gemäß Anspruch 10 oder 11 unter Polymerisationsbedingungen und
Wiedergewinnung des resultierenden Polymers.

## Revendications

1. Procédé de préparation d'un composant catalytique pour la polymérisation d'oléfines, comprenant les étapes de :
(1) dissolution d'un halogénure de magnésium dans un système de solvant pour former une solution homogène, et facultativement, ajout d'un composé donneur d'électrons interne C à celle-ci avant, pendant, ou après la dissolution ;
(2) combinaison d'un composé de titane et d'un co-précipitant avec la solution de l'étape (1) pour former un mélange ;
(3) chauffage lent du mélange de l'étape (2) à une température de 60 à 110 °C, avec un composé donneur d'électrons interne D étant facultativement ajouté pendant ou après le chauffage, et lorsque la température est atteinte, agitation du mélange pendant 0,5 à 8 heures, puis élimination du liquide mère par filtration, et lavage des solides résiduels avec un solvant inerte pour obtenir des solides contenant du magnésium et du titane ; et
(4) traitement des solides contenant du magnésium et du titane de l'étape (3) avec un composé de titane et un composé donneur d'électrons interne E facultatif dans un solvant inerte une ou plusieurs fois, puis lavage des solides avec un solvant inerte pour obtenir un composant catalytique ;
dans lequel le co-précipitant est une combinaison de co-précipitant A et de co-précipitant B, le co-précipitant A est au moins un ester de diol représenté par une formule générale (I) : 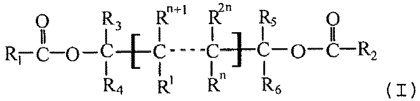
dans lequel R₁ à R₆ et R¹ à R²ⁿ sont indépendamment sélectionnés parmi un hydrogène, un halogène, un alkyle en C₁-C₂₀ linéaire ou ramifié facultativement substitué, un cycloalkyle en C₃-C₂₀, un aryle en C₆-C₂₀, un alkaryle en C₇-C₂₀, un aralkyle en C₇-C₂₀, un alcényle en C₂-C₁₀, et un aryle fusionné en C₁₀-C₂₀, à condition que R₁ et R₂ ne soient pas un hydrogène ; un ou plusieurs de R₃ à R₆ et R¹ à R²ⁿ sont facultativement liés pour former un cycle ; et n est un nombre entier de 0 à 10,
le co-précipitant B est au moins un silane organique représenté par une formule générale (II) : R^{I}ₐR^{II}_{b}Si(OR^{III})_{c}, dans lequel R^{I} et R^{II} sont indépendamment sélectionnés parmi un hydrogène, un halogène, un alkyle en C₁ à C₁₀ linéaire ou ramifié facultativement substitué, un alcényle en C₂ à C₁₀, un cycloalkyle en C₃ à C₁₀, un aryle en C₆ à C₁₀, et un hétéroaryle ayant 3 à 10 atomes de carbone et 1 à 3 hétéroatomes sélectionnés parmi N, O et S ; R^{III} est indépendamment sélectionné parmi un alkyle en C₁ à C₁₀, un cycloalkyle en C₃ à C₁₀ et un aryle en C₆ à C₁₀ ; et dans lequel a et b sont indépendamment un nombre entier de 0 à 4, c est un nombre entier de 0 à 4, et (a + b + c) = 4.

2. Procédé selon la revendication 1, dans lequel le co-précipitant A est sélectionné parmi des esters de diol représentés par une formule générale (III) : 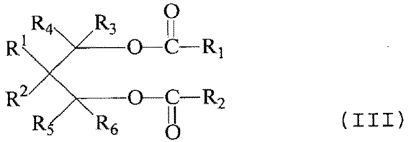 dans lequel R₁ à R₆ et R¹-R² sont tels que définis pour la formule générale (I) dans la revendication 1.

3. Procédé selon la revendication 1, dans lequel dans la formule (II), R^{I} et R^{II} sont indépendamment sélectionnés parmi un alkyle en C₁ à C₈, un cycloalkyle en C₃ à C₆, et un aryle en C₆ à C₁₀, et R^{III} est un aryle en C₁ à C₁₀.

4. Procédé selon l'une quelconque des revendications 1 à 3, dans lequel la quantité du co-précipitant A utilisé se trouve dans la plage de 0,001 à 0,3 mole, et la quantité du co-précipitant B utilisé se trouve dans la plage de 0,01 à 0,5 mole, par rapport à une mole de l'halogénure de magnésium.

5. Procédé selon l'une quelconque des revendications 1 à 4, ayant au moins l'une des caractéristiques suivantes :
- l'halogénure de magnésium est sélectionné parmi des dihalogénures de magnésium, des complexes aqueux ou alcooliques de dihalogénures de magnésium, des dérivés de dihalogénures de magnésium dans lesquels un atome d'halogène dans les dihalogénures de magnésium est remplacé par un alcoxy ou un alcoxy halogéné, et des mélanges de ceux-ci ;
- le système de solvant utilisé dans l'étape (1) est constitué d'un composé époxy organique, d'un composé organophosphoré et d'un diluant inerte facultatif ou, en variante, d'un composé alcool et d'un diluant inerte facultatif, le composé alcool étant sélectionné parmi un alcool aliphatique linéaire ou ramifié ayant de 1 à 10 atomes de carbone, un alcool cycloaliphatique ayant de 3 à 12 atomes de carbone, un alcool alkarylique ayant de 6 à 20 atomes de carbone, un alcool aralkylique ayant de 6 à 20 atomes de carbone, et des mélanges de ceux-ci ;
- l'étape (2) est réalisée de la manière suivante : à une température allant de - 30 °C à 60 °C, un composé de titane est combiné à la solution de l'étape (1), puis un co-précipitant y est ajouté pour former un mélange ; en variante, un co-précipitant est ajouté à la solution de (1), puis à une température allant de -30 °C à 60 °C, la solution est combinée à un composé de titane pour former un mélange ;
- les composés donneurs d'électrons internes C, D, et E sont indépendamment sélectionnés parmi les esters de diol représentés par la formule générale (I), des esters alkyliques d'acides carboxyliques mono-basiques aliphatiques ou aromatiques, des esters alkyliques d'acides carboxyliques poly-basiques aliphatiques ou aromatiques, des éthers aliphatiques, des éthers cycloaliphatiques, des cétones aliphatiques, et des mélanges de ceux-ci ;
- par rapport à une mole de l'halogénure de magnésium, la quantité du composé donneur d'électrons C utilisé se trouve dans la plage de 0 à 3 moles, la quantité des composés donneurs d'électrons D plus E utilisés se trouve dans la plage de 0 à 5 moles, et la quantité des composés donneurs d'électrons C + D + E utilisés se trouve dans la plage de 0 à 5 moles,
- le composé de titane utilisé à l'étape (2) et le composé de titane utilisé à l'étape (4) sont identiques ou différents, et ils répondent à une formule générale : TiXₙ(OR)₄₋ₙ, dans lesquels R est indépendamment un hydrocarbyle en C₁-C₂₀, X est indépendamment un halogène, et n = 1 à 4 ; et
- par rapport à une mole de l'halogénure de magnésium, la quantité du composé de titane utilisé à l'étape (2) se trouve dans la plage de 1,5 à 50 moles, et la quantité du composé de titane total utilisé à l'étape (2) et à l'étape (4) se trouve dans la plage de 2 à 150 moles.

6. Procédé selon la revendication 1, dans lequel le système de solvant utilisé à l'étape (1) est constitué d'un composé époxy organique, d'un composé organophosphoré et d'un diluant inerte facultatif,
dans lequel le composé époxy organique comprend au moins l'un de composés époxy et composés diépoxy aliphatiques, de composés époxy et composés diépoxy aliphatiques halogénés, de l'éther glycidylique, et d'éthers internes, ayant de 2 à 8 atomes de carbone ;
dans lequel le composé organophosphoré comprend au moins l'un d'esters hydrocarbyliques de l'acide orthophosphorique, d'esters hydrocarbyliques halogénés de l'acide orthophosphorique, d'esters hydrocarbyliques de l'acide phosphoreux, et d'esters hydrocarbyliques halogénés de l'acide phosphoreux ;
dans lequel le diluent interne facultatif est sélectionné parmi l'hexane, l'heptane, l'octane, le décane, le benzène, le toluène, le xylène, le 1,2-dichloroéthane, le chlorobenzène, et d'autres solvants hydrocarbonés et hydrocarbonés halogénés ; et
dans lequel, par rapport à une mole de l'halogénure de magnésium, la quantité du composé époxy organique utilisé se trouve dans la plage de 0,2 à 10 moles ; la quantité du composé organophosphoré utilisé se trouve dans la plage de 0,1 à 3 moles ; et la quantité du diluant inerte, le cas échéant, se trouve dans la plage de 0,1 à 10 litres par mole de l'halogénure de magnésium.

7. Procédé selon la revendication 1, dans lequel le système de solvant utilisé à l'étape (1) est constitué d'un composé alcool et d'un diluant inerte facultatif, le composé alcool étant sélectionné parmi un alcool aliphatique linéaire ou ramifié ayant de 1 à 10 atomes de carbone, un alcool cycloaliphatique ayant de 3 à 12 atomes de carbone, un alcool alkarylique ayant de 6 à 20 atomes de carbone, un alcool aralkylique ayant de 6 à 20 atomes de carbone, et des mélanges de ceux-ci, et la quantité de l'alcool utilisé se trouve dans la plage de 2,0 à 6,0 moles, par rapport à une mole de l'halogénure de magnésium.

8. Procédé selon la revendication 1, dans lequel les composés donneurs d'électrons internes C, D, et E sont indépendamment sélectionnés parmi les phtalates, les malonates, les succinates, les glutarates, les pivalates, les adipates, les sébacates, les maléates, les dicarboxylates de naphtalène, les trimellitates, les benzène-1,2,3-tricarboxylates, les pyromellitates, et les carbonates.

9. Composant catalytique obtenu par un procédé selon l'une quelconque des revendications 1 à 8.

10. Catalyseur de polymérisation d'une alphaoléfine de formule CH₂=CHR, dans lequel R est un hydrogène ou un alkyle ayant de 1 à 6 atomes de carbone, comprenant un produit de réaction des composants suivants :
1) le composant catalytique selon la revendication 9 ;
2) un composé alkylaluminium en tant que cocatalyseur ; et
3) facultativement, un composé donneur d'électrons externe.

11. Catalyseur selon la revendication 10, comprenant au moins l'une des caractéristiques suivantes :
- le composé alkyl aluminium est un composé représenté par une formule générale AlRₙX₃₋ₙ, dans lequel R est indépendamment un hydrogène ou un radical hydrocarbure en C₁-C₂₀ ; X est indépendamment un halogène ; et n a une valeur satisfaisant à 0 < n ≤ 3 ;
- le composé alkyl aluminium est utilisé en une quantité telle qu'un rapport molaire de l'aluminium à l'intérieur de celui-ci sur le titane dans le composant catalytique solide (1) se trouve dans la plage de 5 à 5 000 ;
- le composé donneur d'électrons externe est un composé de silicium organique d'une formule générale RₙSi(OR')₄₋ₙ, dans lequel 0 < n ≤ 3, R et R' sont indépendamment sélectionnés parmi un alkyle en C₁-C₂₀ facultativement halogéné, un alcényle en C₂-C₂₀, un cycloalkyle en C₃-C₂₀, un aryle en C₆-C₂₀, et un hétéroaryle ayant 3 à 10 atomes de carbone et 1 à 3 hétéroatomes sélectionnés parmi N, O et S, et R peut également être un halogène ou un hydrogène ; et
- le composé donneur d'électrons externe est utilisé en une quantité telle qu'un rapport molaire du composé alkyl aluminium sur le composé donneur d'électrons externe se trouve dans la plage de 0,1 à 500.

12. Procédé de polymérisation d'une oléfine, comprenant :
la mise en contact d'une oléfine de formule CH₂=CHR, dans laquelle R est H ou un alkyle ayant de 1 à 6 atomes de carbone, facultativement d'une autre sorte de ladite oléfine en tant que comonomère, et facultativement d'un diène en tant que second comonomère, avec le catalyseur selon la revendication 10 ou 11 dans des conditions de polymérisation ; et
la récupération du polymère résultant.
